# EUROPÄISCHE PATENTSCHRIFT

(11) **EP 2 562 024 B1**
(45) Veröffentlichungstag und Bekanntmachung des Hinweises auf die Patenterteilung: **24.12.2014**
(21) Anmeldenummer: 11178820.4
(22) Anmeldetag: 25.08.2011
(51) Int. Cl.: B60K 15/04

(54) **Deckellos verschließbarer Tankstutzenabschluss**
Cap-free closable filler neck end
Fermeture de manchon de citerne pouvant être fermée sans couvercle

(43) Veröffentlichungstag der Anmeldung: 27.02.2013
(73) Patentinhaber: Gerdes GmbH, 50170 Kerpen (DE)
(72) Erfinder: Gerdes, Ralf, 50937 Köln (DE)
(74) Vertreter: Bungartz, Klaus Peter

(56) Entgegenhaltungen:
- EP-A1- 1 319 545
- WO-A-2006/084908
- DE-A1-102008 031 250
- DE-U1-202005 012 256

## Beschreibung

Die Erfindung betrifft einen deckellos verschließbaren Tankstutzenabschluss für den Kraftstofftank eines Kraftfahrzeugs nach dem Oberbegriff des Anspruchs 1.

Der gattungsgemäße Tankstutzenabschluss kann insbesondere so ausgebildet sein, dass er einen Rohrstutzen zum Einschieben des Ausgaberohrs einer Zapfpistole und einen deckellosen Verschluss mit einer oberen Verschlussklappe und einem Schiebeelement aufweist, wobei der deckellose Verschluss über die von einer Feder in Schließposition gehaltene Verschlussklappe geschlossen ist. Das Ausgaberohr ist zum Öffnen des Verschlusses durch eine Durchstecköffnung in dem Schiebeelement in den Rohrstutzen einführbar und das Schiebeelement ist derart gelagert, dass es von einer Verschlussposition, in der es seitlich zum Rohrstutzen zumindest teilweise versetzt angeordnet ist, in eine Öffnungsposition, in der das Ausgaberohr durch das Schiebeelement zum Betanken des Kraftfahrzeugs in den Rohrstutzen einschiebbarist, verlagerbar.

Zur Sicherung des Verschlusses gegen unbeabsichtigtes oder missbräuchliches Öffnen ist das Schiebeelement bevorzugt über wenigstens ein Sicherungselement gegen Verschieben von der Verschlussposidon in die Öffnungsposition gesichert. Dieses Sicherung ist durch das Einschieben des Ausgaberohrs zur Freigabe der Verschiebbarkeit des Schiebeelements selbsttätig deaktivierbar, wobei die Verschlussklappe dabei um eine Schwenkachse schwenkbar im Tankstutzenabschluss gelagert ist und die Durchstecköffnung dadurch in Verschlussposition blockiert ist, dass ein Rand der Verschlussklappe in eine Verriegelungsnut eingreift und dadurch freigegeben wird, dass durch das Verschieben des Schiebeelements der Rand der Verschlussklappe aus der VerriegeLungsnut herausgezogen wird.

Ein deckellos verschließbarer Tankstutzenabschluss dieser Art ist aus der WO 2009/135954 A2 bekannt. Der bekannte Tankstutzenabschluss weist zwei Klappen auf, über die er nach außen abgedichtet ist. Hierbei ist eine untere Dichtklappe vorgesehen, die die wesentliche Ablichtung des Tankstutzens übernimmt. Die obere Verschlussklappe kann ebenfalls als Dichtklappe ausgebildet sein oder auch nur einen vergleichsweise einfachen Schutz gegen Eindringen von Schmutz darstellen Derartige Tankstutzenabschlüsse mit zwei Klappen werden üblicherweise als deckellose Tankstutzenabschlüsse verwendet, wobei natürlich auch ein separater Deckel vorgesehen sein kann.

Bevorzugt sind die Tankstutzenabschlüsse so ausgebildet, dass sie sich durch das Einschieben des Ausgaberohrs einer Zapfpistole selbsttätig öffnen lassen, andererseits aber gegen missbräuchliches Öffnen, sei es in Diebstahlabsicht oder im Falle eines Unfalls, gesichert sind. Hierzu weisen die bekannten Tankstutzenabschlüsse das Schiebeelement auf, in das zunächst das Ausgaberohr der Zapfpistole eingesetzt wird. Dieses Schiebeelement kann hierzu eine Durchgangsöffnung aufweisen oder U-förmig ausgebildet sein.

In der Verschlussposition ist das Schiebeelement mit der Durchgangsöffnung relativ zur Achse des Rohrstutzens seitlich versetzt, wobei unterhalb der durch Steck Möglichkeit für das Ausgaberohr bei einer bevorzugten Ausgestaltung eine schiefe Ebene angeordnet ist, auf die das Ausgaberohr nach Passieren des Schiebeelements mit seinem unteren Rand aufgesetzt wird und anschließend in Richtung der Achse des Rohrstutzens abgeleitet. Dabei wird das Schiebeelement von dem Ausgaberohr der Zapfpistole so weit verlagert, bis das Ausgaberohr oberhalb des Ruhrstutzens angeordnet ist und dann in den Rohrstutzen eingeschoben werden kann.

Besonders bevorzugte Tankstutzenabschlüsse weisen dabei eine Sicherung gegen Fehlbetankung auf. Hierzu kann zum Beispiel das Schiebeelement über Verriegelungsmittel blockiert sein, die nur von einem Ausgaberohr einer vorgegebenen Größe entriegelt werden können. Dies kann beispielsweise dadurch realisiert werden, dass zwei gegenüberliegende Verriegelungsmittel vorgesehen sind, die das Schiebeelement formschlüssig im Gehäuse des Tankstutzenabschlusses festlegen, wobei beide Verriegelungsmittelvon dem Ausgaberohr nieder gedrückt werden müssen, um das Schiebeelement zu entriegeln und verschiebbar zu machen.

Bei den bekannten Tankstutzenabschlüssen wird durch das Verschieben des Schiebeelementes die obere Verschlussklappe entriegelt. Dies kann zum Beispiel dadurch geschehen, dass die obere Verschlussklappe gelenkig an dem Schiebeelement angelenkt ist, so dass sie mit dem Verschiebeelement verschoben wird. Bei dieser Ausgestaltung ist der vorderen Rand der oberen Verschlussklappe in einer Verriegelungsnut im Gehäuse des Tankstutzenabschlusses in Verschlussposition gehalten, wobei durch das oben beschriebene Verschieben die Verschlussklappe aus der Verriegelungsnut herausgezogen wird.

Alternativ kann die Verschlussklappe auch am Gehäuse des Tankstutzenabschlusses angelenkt sein, so dass sich dann im Schiebeelement die Nut befindet, in die der vorderen Rand der oberen Verschlussklappe in Verschlussposition eingreift. Auch hier wird durch das Verschieben des Schiebeelementes die dann feststehende, obere Verschlussklappe mit ihrem vorderen Rand aus der Verriegelungsnut heraus gezogen. Durch das Herausziehen der oberen Verschlussklappe aus der Nut wird diese entriegelt und kann von dem Ausgaberohr der Zapfpistole beim Eindringen in den Rohrstutzen aufgestoßen werden.

Die bekannten Tankstutzenabschlüsse verschließen den Rohrstutzen zuverlässig auch ohne gesonderten Tankdeckel. Durch die oben beschriebene Ausgestaltung weisen sie den besonderen Vorzug auf, dass sie nur mit einer geeigneten Zapfpistole geöffnet werden können. Ist diese zu dünn, werden die beiden Verriegelungsmittel nicht gleichzeitig erfasst und das Schiebeelement nicht entriegelt. Ist das Ausgaberohr dagegen zu dick, kann es nicht durch das Schiebeelement auf die schiefe Ebene gesetzt werden.

Nachteilig bei den bekannten Tankstutzenabschlüssen ist jedoch die Tatsache, dass zum Verschließen die obere Verschlussklappe zunächst in die waagerechte Position zurückfedern muss, so dass dann infolge des durch eine Rückstellfeder zurückgestellten Schiebeelement der vordere Rand der oberen Verschlussklappe wieder in die Nut eingreifen kann.

Ist jedoch die obere Verschlussklappe, die ihrerseits durch eine Rückstellfeder nach Herausziehen des Ausgaberohrs in die Verschlussposition zurückgestellt wird, beim Zurückfedern des Schiebeelementes noch nicht in dieser Verschlussposition, wird die Verschlussklappe von unten gegen die untere Nutbegrenzung klappen, jedoch nicht mehr in die Nut selbst eingreifen können. Sie ist dann zwar fast geschlossen, jedoch ist die Arretierung deaktiviert, da sie gegen die Kraft der Rückstellfeder weiterhin nach unten geklappt werden kann.

Diese Gefahr besteht insbesondere dann, wenn nicht genormte Zapfpistolen verwendet werden, die andere Formen von Ausgaberohren aufweisen. Auch im Falle von verschlissenen Ausgabeohren, deren vorderer Mündungsbereich nicht mehr zylindrisch mit ebenen Rändern ausgebildet ist, kann es passieren, dass einerseits das Schiebeelement schon zurück bewegt wird, während andererseits ein Teil des Ausgaberohrs die obere Verschlussklappe noch gegen die Kraft der Rückstellfeder leicht geöffnet hält.

Ein weiterer deckelloser Stutzenabschluss mit einer Fehlbetankungsvorrichtung ist aus der DE 20 2005 012 256 U1 bekannt. Bei diesem Verschluss wird der innere Stutzen von zwei Schalen gebildet, die durch den einzuführenden Rüssel der Zapfpistole auseinander gedrückt werden können. Die Verschlussklappe ist in einer Nut in den Schalen gehalten und gerät durch das Auseinanderdrücken außer Eingriff und kann aufgestoßen werden.

Der Nachteil besteht darin, dass zwar der untere Rand der Schalen abgeschrägt ist, so dass die Verschlusskappe hierüber auch ohne die Kraft des Rüssels in die Verschlussposition zurückkehren könnte, dies aber nur möglich ist, wenn die die Schalen zusammendrückende Feder nicht zu stark dimensioniert ist. Dann aber ist der Verschluss nicht hinreichend gegen unbeabsichtigtes Öffnen gesichert.

Eine sich selbsttätig verriegelnde Verschlussklappe ist ferner aus der DE 10 2008 031 250 A1 und der EP 1319 545 A1 bekannt.

Aufgabe der Erfindung ist es daher, einen deckellosen Verschluss für einen Rohrstutzen zu schaffen, der hinsichtlich der Schließfunktion noch weiter optimiert ist.

Diese Aufgabe wird nach der Erfindung durch gelöst, einen Tankstutzenabschluss nach Anspruch 1 gelöst.

Erfindungsgemäß wird nun die Nut so ausgebildet, dass unabhängig von der Position des Schiebeelements die obere Verschlussklappe immer in Verschlussposition zurückkehren kann. Ist das Schiebeelement bereits in Richtung der Verschlussposition verlagert oder befindet sich das Schiebeelement bereits in der endgültigen Verschlussposition, ist bei den bekannten Tankstutzenabschlüssen dagegen, sofern sich die obere Verschlussklappe noch nicht in der Verschlussposition befindet, ein Erreichen dieser Verschlussposition nicht mehr möglich, da der untere Bereich der Verriegelungsnut nun im Schwenkbereich der oberen Verschlussklappe liegt. Dieses Problem wird nun dadurch gelöst, dass der untere Nutbereich in Form der Schwenksperre dann, wenn die obere Verschlussklappe gegen diesen Bereich drängt, zurückfedert und so der oberen Verschlussklappe erlaubt, trotz des bereits teilweise oder vollständig in die Ausgangslage verschobenen Schiebeelementes noch in die Verriegelungsnut einzugreifen. Nachdem die obere Verschlussklappe sich in der Verschlussposition befindet, federt der untere Rand der Verriegelungsnut in Form der Schwenksperre wieder zurück und legt sich mit einem insbesondere ebenen Bereich an die Unterseite der oberen Verschlussklappe abschnittsweise an. Hierdurch wird diese dann verriegelt.

Für die Funktion des erfindungsgemäßen Tankstutzenabschlusses ist es nicht erforderlich, dass die obere Verschlussklappe mit ihrem vorderen Rand in die Verriegelungsnut eingreift. Vielmehr können dies zum Beispiel auch Seitenbereiche sein, wobei dann die obere Verschlussklappe so geformt ist, dass sie durch das Verlagern des Schiebeelementes aus der Verriegelungsnut heraus bewegt wird. Dies kann über eine geeignete Grundform oder auch seitliche, von der oberen Verschlussklappe vorstehende Verriegelungsnasen realisiert werden.

Bei einer bevorzugten Ausgestaltung der Erfindung wird die Schwenksperre, also der untere Rand der Verriegelungsnut, von einem Federelement gebildet, das parallel zur geschlossenen oberen Verschlussklappe verschiebbar gelagert ist. Dieses Federelement wird durch eine Feder in eine vordere Position gedrängt. Der untere Rand des Federelementes ist so ausgebildet, dass die von der Rückstellfeder in Verschlussposition gedrängte obere Verschlussklappe das Federelement zurückdrängen kann, so dass aus Sicht der oberen Verschlussklappe die Verriegelungsnut freigegeben wird. Die obere Verschlussklappe wird dann weiter nach oben schwingen und an der Innenseite des Oberteils der Verriegelungsnut anschlagen. Nachfolgend federt das Federelement zur Komplettierung der Verriegelungsnut wieder zurück, so dass der obere Teil des Federelements den unteren Rand der oberen Verschlussklappe hintergreift. In dieser Position ist die obere Verschlussklappe dann sicher verriegelt.

Zum Öffnen des Tankstutzenabschlusses wird dann zunächst das Schiebeelement wieder von der Verschlussposition in einer Führungsposition verlagert, wodurch entweder die obere Verschlussklappe oder die Verriegelungsnut in radiale Richtung bewegt wird. Hierdurch wird der entsprechende Abschnitt der oberen Verschlussklappe, zum Beispiel der vordere Randbereich, aus der Verriegelungsnut herausgezogen und die obere Verschlussklappe dann wieder freigegeben.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt
- Fig. 1: eine erste Ausgestaltung der Erfindung in einer Seitenansicht im Schnitt,
- Fig. 2: eine zweite Ausgestaltung der Erfindung in einer Seitenansicht im Schnitt
- Fig. 3: die in Figur 2 dargestellte Ausgestaltung der Erfindung in geöffneter Position mit eingeschobenem Ausgaberohr einer Zapfpistole,
- Fig. 4: die in den Figuren 2 und 3 dargestellte Ausgestaltung der Erfindung nach der Entnahme des Ausgaberohrs vor endgültigem Verschließen des deckellosen Verschlusses und

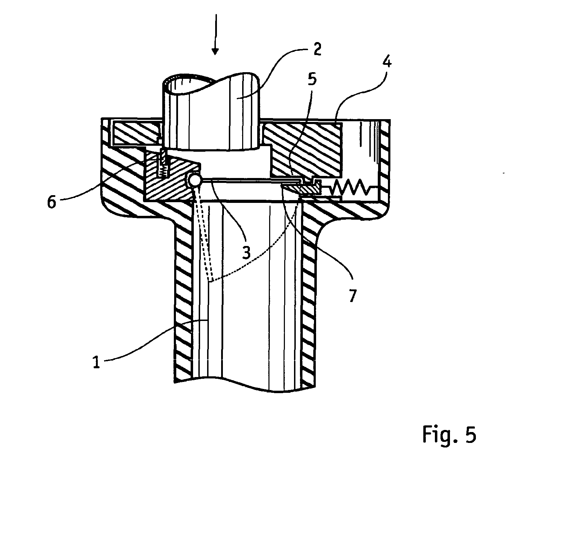

- Fig. 5: eine weitere Ausgestaltung der Erfindung.

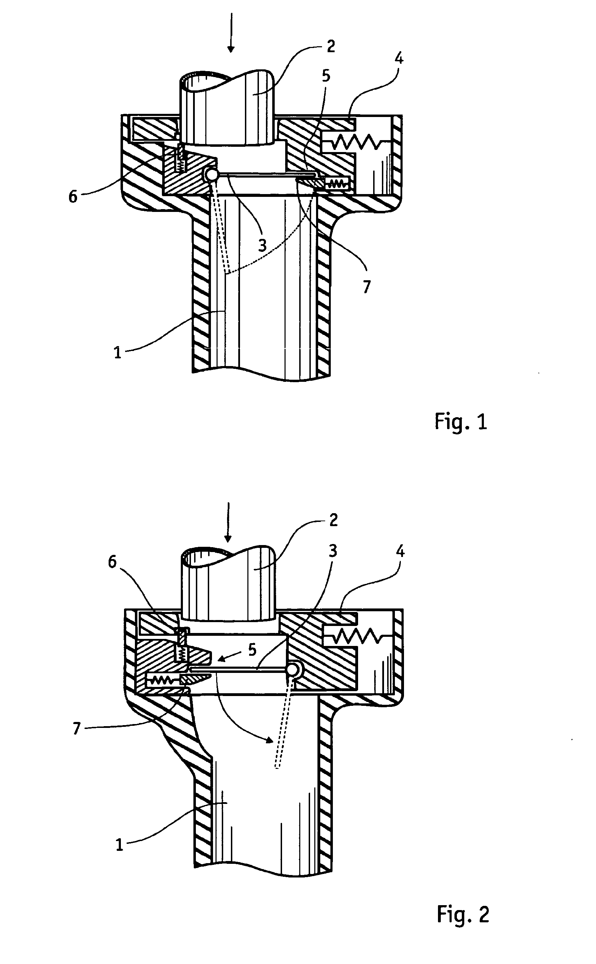

In Figur 1 ist ein erfindungsgemäßer Tankstutzenabschluss dargestellt, der Teil eines Einfüllstutzens eines Kraftstofftanks ist. Er kann entweder Teil des gesamten Stutzens sein oder über eine lösbare, eine nicht lösbare oder nur mit Spezialwerkzeug Lösbare Verbindung mit dem eigentlichen Einfüllstutzen verbunden sein.

Der Tankstutzenabschluss weist eine obere Verschlussklappe 3 und eine hier nicht dargestellte untere Dichtklappe auf, wobei die beiden Klappen den Tankstutzen ohne separaten Tankdeckel ausreichend und sicher verschließen. Die obere Verschlussklappe 3 ist so mit dem Rohrstutzen 1 verbunden, so dass sie nur bei Einführung des Ausgaberohrs einer Zapfpistole 2 geöffnet werden kann, das sortenabhängig den erforderlichen Durchmesser aufweist.

Hierzu ist die obere Verschlussklappe 3 bei der in Figur eins dargestellten Ausführungsform des erfindungsgemäßen Tankstutzenabschlusses an einem Einbauteil schwenkbar gelagert, dass in den oberen Bereich des Tankstutzenabschlusses eingesetzt ist. Alternativ kann die obere Verschlussklappe 3 natürlich auch unmittelbar mit an der Wandung des Tankstutzenabschlusses gelagert sein. Zum Öffnen der oberen Verschlussklappe 3 wird zunächst, wie in Figur 1 dargestellt, das Ausgaberohr einer Zapfpistole 2 in eine Durchgangsöffnung des Schiebeelements 4 eingesetzt.

Wird das Ausgaberohr der Zapfpistole 2 nun weiter nach unten gedrückt, gleitet es auf der schiefen Ebene des Einbauteils, an dessen unterem Bereich die obere Verschlussklappe 3 schwenkbar gelagert ist, in Richtung der Mittelachse des Rohrstutzens 1 ab, bis es oberhalb des Rohrstutzens 1 angeordnet ist, so dass es nach Öffnen der oberen Verschlussklappe 3 in den Rohrstutzen 1 ist. Die obere Verschlussklappe 3 muss, bevor das Ausgaberohr der Zapfpistole 2 diese aufstoßen kann, zunächst entriegelt werden.

In der in Figur 1 dargestellten Verschlussposition, in der die obere Verschlussklappe 3 verriegelt ist, ist der vordere Bereich der oberen Verschlussklappe 3 in einer VerriegeLungsnut 5 gehalten, so dass die obere Verschlussklappe 3 in Schwenkrichtung festgelegt ist. Durch das Abgleiten des Ausgaberohrs der Zapfpistole 2 auf der schiefen Ebene wird gleichzeitig das Schiebeelement 4 gegen die Kraft eine Rückstellfeder seitlich verschoben, wobei die am Schiebeelement 4 angeordnete Verriegelungsnut 5 ebenfalls seitlich verlagert wird.

Da die obere Verschlussklappe 3 an einem nicht bewegten Teil des Tankstutzenabschlusses angeordnet ist, wird durch die Verschiebung des Schiebeelements 4 die Verriegelungsnut 5 ebenfalls verschoben, insbesondere soweit verschoben, dass der vordere Rand der oberen Verschlussklappe 3 sich nicht mehr mit der Verriegelungsnut 5 in Eingriff befindet.

Durch die Relativbewegung zwischen der oberen Verschlussklappe 3 und der Verriegelungsnut 5 wird somit die Arretierung der oberen Verschlussklappe 3 gelöst, so dass diese nun hingegen die Kraft einer Rückstellfeder nach unten geschwenkt werden kann. Der Benutzer muss also zum Öffnen des oberen Bereichs des Tankstutzenabschlusses lediglich das Ausgaberohr der Zapfpistole 2 in die Öffnung des Schiebeelements 4 einstecken und die Zapfpistole 2 weiter herunter drücken. Das Abgleiten auf der schiefen Ebene und das selbsttätige Entriegeln der oberen Verschlussklappe 3 wird der Durchgang in den Rohrstutzen 1 frei und die Zapfpistole 2 kann in den Rohrstutzen 1 eingeschoben werden.

Die in Figur 1 dargestellte Ausführungsform des erfindungsgemäßen Tankstutzenabschlusses meist darüber hinaus ein Sicherungselement 6 auf, das dafür Sorge trägt, dass nur ein Ausgaberohr einer Zapfpistole 2 für geeigneten Kraftstoff die oben beschriebene Funktion der Entriegelung realisieren kann. Hierzu sind zwei gegenüberliegende Sicherungselemente 6 vorgesehen, die das Schiebeelement 4 formschlüssig mit den unbeweglichen Teilen des Tankstutzenabschlusses verbinden.

Durch das Einsetzen des Ausgaberohrs in die Ausnehmung des Schiebeelements 4 werden dann, wenn der Durchmesser des Ausgabe hinreichend groß ist, beide Sicherungselemente 6 herunter gedrückt. Hierdurch wird das Schiebeelement 4 entriegelt und kann über die von dem Ausgaberohr übertragene Querkraft, die durch das Abgleiten auf der schiefen Ebene induziert ist, derart verlagert werden, dass der Versatz der Durchgangsöffnung zum Rohrstutzen 1 aufgehoben wird, so dass das Ausgaberohr weiter in den Rohrstutzen 1 eingeführt werden kann.

Erfindungsgemäß ist nun die Verriegelungsnut 5 so ausgebildet, dass sie in nach unten gerichteter Schwenkrichtung die obere Verschlussklappe 3 festgelegt. In die entgegengesetzte Schwenkrichtung dagegen, also in die Richtung der Verschlussposition, kann der untere Rand der Verriegelungsnut 5 von der sich in Verschlussposition bewegenden, oberen Verschlussklappe 3 verdrängt werden, so dass selbst dann, wenn das Schiebeelement 4 nach Herausziehen des Ausgaberohrs aus dem Rohrstutzen 1 wieder teilweise oder vollständig zurück verlagert ist, die obere Verschlussklappe 3 in die Verriegelungsnut 5 eingreifen kann.

Hierzu ist der untere Rand der Verriegelungsnut 5 beweglich und derart ausgebildet, dass er von der durch die Rückstellkraft getriebenen oberen Verschlussklappe 3 verdrängbar ist und nach dem Passieren des jeweiligen Randbereichs der oberen Verschlussklappe 3 diese wiederum hintergreifend zurückfedert. Im gezeigten Beispiel wird dies über eine schiefe Ebene auf der Unterseite des als Schwenksperre 7 eingesetzten Federelements realisiert.

Das Federelement ist in radialer Richtung verschiebbar am Schiebeelement 4 gegen die Kraft einer Feder derart gelagert, dass die Feder das Federelement radial nach innen gedrückt. An seiner Unterseite ist das Federelement schräg ausgeführt, insbesondere weist einen vorderen, im Querschnitt dreieckigen Bereich auf, der in Richtung der Achse des Rohrstutzen 1 spitz zu läuft und mit einer schrägen Seite der sich schließenden oberen Verschlussklappe 3 zugewandt ist. Der obere Bereich des Federelements ist eben ausgebildet und liegt nach dem vollständigen Verschließen der oberen Verschlussklappe 3 an deren unteren Rand an.

Die Rückstellkraft des Federelements und der oberen Verschlussklappe 3 sowie die Steigung der schiefen Ebene auf der Unterseite des Federelements sind bevorzugt so dimensioniert und ausgebildet, dass die obere Verschlussklappe 3 selbst dann noch den unteren Rand der Verriegelungsnut 5 verdrängen kann, wenn die obere Verschlussklappe ohne großen Schwung an dem unteren Rand des Federelements anliegt.

Durch die gegen die Federkraft bewegliche Schwenksperre 7 in Form des Federelements kann nun die obere Verschlussklappe 3 in allen Positionen des Schiebeelements 4 in die Verriegelungsnut 5 eingreifen. Selbst wenn das Schiebeelement 4 durch Verwendung eines beschädigten oder ungeeigneten Ausgaberohrs einer Zapfpistole 2 beim Hochklappen der oberen Verschlussklappe 3 bereits verschoben sein sollte, kann die obere Verschlussklappe 3 den unteren Rand der Verriegelungsnut 5 verdrängen und so in Verschlussposition gelangen. Anschließend federt die Schwenksperre 7 wieder zurück und legt sich mit einem zur Unterseite der oberen Verschlussklappe 3 parallelen Sperrbereich neben die obere Verschlussklappe 3. Auf diese Weise wird die Verriegelungsnut 5 wieder geschlossen und die obere Verschlussklappe 3 blockiert.

In den Figuren 2 bis 4 ist eine weitere Ausgestaltung der Erfindung mit unterschiedlich weit fortgeschrittenem Einschub des Ausgaberohrs der Zapfpistole 2 dargestellt.

Bei dieser Ausgestaltung ist die obere Verschlussklappe 3 an dem Schiebeelement 4 an gelenkt. Dies bedeutet, dass die obere Verschlussklappe 3 mit dem Schiebeelement 4 bewegt ist, wenn das Schiebeelement 4 von dem Ausgaberohr der Zapfpistole 2 verdrängt wird. Die Verriegelungsnut 5 ist hier an einem feststehenden Bauteil im Inneren des Tankstutzenabschlusses vorgesehen. Wie auch bei der oben beschriebenen Ausgestaltung ist der untere Rand der Verriegelungsnut 5 von einer Schwenksperre 7 in Form eines radial gegen die Kraft einer Feder beweglichen Federelements gebildet.

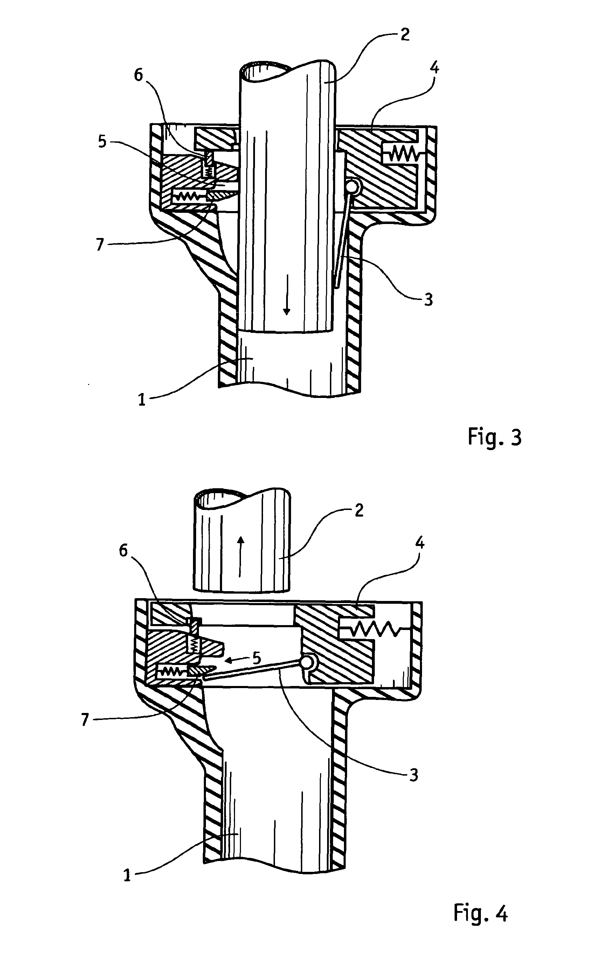

Wie aus den Figuren 3 und 4 ersichtlich ist, verlagert das Abgleiten des Ausgaberohrs der Zapfpistole 2 auf der schiefen Ebene desjenigen Bauteils, an dem hier die Verriegelungsnut 5 angeordnet ist, und das weitere Einschieben in das Innere des Rohrstutzens 1 zunächst das Schiebeelement 4 dergestalt, dass die Durchgangsöffnung im Schiebeelement 4 oberhalb des inneren Querschnitt des Rohrstutzens 1 zum liegen kommt-Dies ermöglicht es, dass das Ausgaberohr weiter in den Rohrstutzen 1 eingeschoben werden kann.

Figur 4 zeigt den Zustand, der bei den bekannten Tankstutzenabschlüssen nachteilig ist und den die Erfindung nun vermeidet. Hat der Benutzer zum Beispiel das Ausgaberohr der Zapfpistole 2 beim Herausziehen verkantet oder entspricht dieses Ausgaberohr nicht der internationalen Norm bzw. ist beschädigt, kann es passieren, dass das Schiebeelement 4 zu früh in Richtung der Ausgangsposition zurückverlagert wird. In diesem Fall schließt sich die obere Verschlussklappe 3 verspätet, so dass sich die Verriegelungsnut 5 bereits in einer Position befindet, in der der vorderen Rand der oberen Verschlussklappe 3 den unteren Rand der Verriegelungsnut 5 nicht mehr passieren kann. Bei den bekannten Tankstutzenabschlüssen würde zwar die Federkraft der oberen Verschlussklappe 3 diese nun hingegen die Unterseite der Verriegelungsnut 5 drücken, jedoch wäre die obere Verschlussklappe 3 gegen Verschwenken nach unten nicht blockiert.

Erfindungsgemäß wird nun die Schwenksperre 7, die hier den unteren Teil der Verriegelungsnut 5 bildet, von der oberen Verschlussklappe 3 nach links gedrückt, so dass sich die obere Verschlussklappe 3 in die endgültige Verschlussposition bewegen kann und nachfolgend das die Schwenksperre 7 bildende Federelement wieder zum Schließen der Verriegelungsnut 5 zurückfedert.

In Figur fünf ist eine weitere Ausgestaltung der Erfindung dargestellt. Bei dieser Ausgestaltung wird die Schwenksperre 7von der gleichen Feder betätigt, wie das Schiebeelement 4. Hierzu ist die Schwenksperre 7 in dem Schiebeelement 4 in einer Durchgangsbohrung gelagert, wobei ein hinterer Bereich des die Schwenksperre 7 bildenden Federelementes mit der Rückstellfeder zusammenwirkt. Das Federelement erstreckt sich durch die Durchgangsbohrung in die Durchgangsöffnung des Schiebeelementes 4 und bildet mit seinem vorderen Bereich die untere Begrenzung der Verriegelungsnut 7.

Ferner weist das Federelement einen Anschlag auf, der die Verschiebbarkeit des Federelementes in Richtung der Achse des Rohrstutzens 1 begrenzt, so dass die auf das Federelement wirkende Rückstellfeder nicht nur das Federelement zur Bildung der Schwenksperre 7 in Richtung der Achse des Rohrstutzens 1 drängt, sondern bei anliegendem Anschlag gleichzeitig auch das Schiebeelement 4 in die Verschlussposition drückt. Auf diese Weise kann eine gemeinsame Feder sowohl die Stellfeder für die Schwenksperre 7 als auch die Rückstellfeder für das Schiebeelement 4 sein.

Die oben beschriebenen Ausführungsformen sind nur einige beispielhafte Möglichkeiten, wie die Erfindung umgesetzt werden kann. Wichtig für die Erfindung ist die Tatsache, dass zum einen die obere Verschlussklappe 3 gegen nach unten Schwenken in Verschlussposition nicht nur durch ihre Rückstellfeder sondern auch über eine formschlüssige Blockade gesichert ist. Dies erfolgt über die Verriegelungsnut 7, wobei hier auch andere Verriegelungselemente, die seitlich in den Schwenkbereich der oberen Verschlussklappe 3 ragen können, Verwendung finden können. Auch ein Verdrehen eines Ringes, der unter der oberen Verschlussklappe 3 angeordnet sein kann und erst durch die Drehung den für die Schwenkbewegung notwendigen Raum freigibt, kann die Sicherung durch die Schwenksperre 7 bewirken.

Weiter ist wesentlich für die Erfindung, dass die Schwenksperre 7 so ausgebildet ist, dass sie von der durch die zugeordneten Rückstellfeder sich bei Entnahme des Ausgaberohrs der Zapfpistole 2 selbsttätig schließenden oberen Verschlussklappe 3 in Verschlussrichtung überwindbar ist, während in die entgegengesetzte Öffnungsrichtung eine Bewegung des Schiebeelements 4 notwendig ist, um die Schwenksperre 7 zu lösen.

### Bezugszeichen liste:

- 1: Rohrstutzen
- 2: Zapfpistole
- 3: Obere Verschlussklappe
- 4: Schiebeelement
- 5: Verriegelungsnut
- 6: Sicherungsselement
- 7: Schwenksperre

## Patentansprüche

1. Deckellos verschließbarer Tankstutzenabschluss für einen Kraftstofftank eines Kraftfahrzeugs, mit einem Rohrstutzen (1) zum Einschieben des Ausgaberohrs (2) einer Zapfpistole und einem oberen Verschluss, der eine obere Verschlussklappe (3) aufweist, die von in einer, die obere Verschlussklappe (3) zumindest abschnittsweise aus Sicht der Einfüllöffnung hintergreifenden Klappensicherung in Verschlussposition gehalten ist, wobei die Klappensicherung von einer Verriegelungsnut (5) gebildet ist, in die zumindest ein Abschnitt des Randes der oberen Verschlussklappe (3) eingreift, und wobei die Klappensicherung durch räumliche Verlagerung der oberen Verschlussklappe (3) durch Herausführen des Randes aus der Verriegelungsnut (5) lösbar ist, **dadurch gekennzeichnet,dass** der untere Bereich der Verriegelungsnut (5) von einer gegen die Kraft einer Feder verschiebbaren Schwenksperre (7) gebildet ist, die derart ausgebildet ist, dass sie durch die federbelastete obere Verschlussklappe (3) verschiebbar ist und nach Anliegen der oberen Verschlussklappe (3) an dem oberen Nutrand selbsttätig, die obere Verschlussklappe (3) von unten hintergreifend zum Schließen der Verriegelungsnut (5) den Rand der oberen Verschlussklappe hintergreifend zurückfedert.

2. Deckellos verschließbarer Tankstutzenabschluss für einen Kraftstofftank eines Kraftfahrzeugs, mit einem Rohrstutzen (1) zum Einschieben des Ausgaberohrs (2) einer Zapfpistole, mit einem deckellosen Verschluss, der eine federbelastete, obere Verschlussklappe (3) und ein Schiebeelement (5) aufweist, wobei das Ausgaberohr (2) durch eine Durchstecköffnung in dem Schiebeelement (4) in den Rohrstutzen (1) einführbar ist und das Schiebeelement (5) derart gelagert ist, dass es von einer Verschlussposition, in der es seitlich zum Rohrstutzen (1) zumindest teilweise versetzt angeordnet ist, in eine Öffnungsposition, in der das Ausgaberohr (2) durch das Schiebeelement (4) zum Betanken des Kraftfahrzeugs in den Rohrstutzen (1) durch den deckellosen Verschluss einschiebbar ist, gegen die Kraft einer Rückstellfeder verlagerbar ist, und wobei die Verschlussklappe um eine Schwenkachse schwenkbar im Tankstutzenabschluss gelagert ist und die Durchstecköffnung dadurch in Verschlussposition blockiert ist, dass ein Rand der Verschlussklappe (3) in eine Verriegelungsnut (5) eingreift und dadurch freigegeben wird, dass durch das Verschieben des Schiebeelements (4) der Rand der Verschlussklappe (3) aus der Verriegelungsnut (5) herausgezogen wird,
**dadurch gekennzeichnet, dass**
der untere Rand der Verriegelungsnut (5) von einer in Richtung des Nutgrundes verschiebbaren Schwenksperre (7) in Form eines Federelements gebildet ist, dass gegen die Kraft einer Feder verlagerbar ist und derart gelagert und ausgebildet ist, dass es durch die federbelastete, obere Verschlussklappe (3) zur Freigabe der Nut verlagerbar ist und nach Anliegen der oberen Verschlussklappe (3) an dem oberen Nutrand selbsttätig, die obere Verschlussklappe (3) hintergreifend, zurückfedert, um die Verriegelungsnut (5) zu schließen.

3. Deckellos verschließbarer Tankstutzenabschluss nach Anspruch 2, **dadurch gekennzeichnet, dass** das Schiebeelement (4) über wenigstens ein Sicherungselement (6) gegen Verschieben von der Verschlussposition in die Öffnungsposition gesichert ist, das durch das Einschieben des Ausgaberohrs (2) zur Freigabe der Verschiebbarkeit des Schiebeelements (4) selbsttätig deaktivierbar ist.

4. Deckellos verschließbarer Tankstutzenabschluss nach Anspruch 2 oder 3, **dadurch gekennzeichnet, dass** die Schwenksperre (7) insbesondere in Richtung der Achse des Rohrstutzens (1) gegen die Kraft der Feder verschiebbar gelagert ist.

5. Deckellos verschließbarer Tankstutzenabschluss nach Anspruch 4, **dadurch gekennzeichnet, dass** die Schwenksperre (7) von einem quer zur Längsachse des Rohrstutzens (1) verschiebbar gegen die Kraft eine Rückstellfeder gelagerten Federelement gebildet ist, dass an seiner Oberseite zur Bildung des Innenrandes der Verriegelungsnut (5) eine ebene Fläche aufweist und an seiner, dem unteren Teil des Rohrstutzens (1) zugewandten Unterseite eine schiefe Ebene als Kontaktfläche mit der schließenden, oberen Verschlussklappe (3) aufweist, wobei die Kraft der Feder, die das Schließen der oberen Verschlussklappe (3) bewirkt relativ zur Schrägstellung der schiefen Ebene und der Federkraft, die die Rückstellung des die Schwenksperre (7) bildenden Federelements bewirkt, derart ausgelegt ist, dass die sich schließende, obere Verschlussklappe (3) die Schwenksperre (7) zu verdrängen vermag.

6. Deckellos verschließbarer Tankstutzenabschluss nach einem der Ansprüche 2, 3, 4 oder 5, **dadurch gekennzeichnet, dass** die obere Verschlussklappe (3) an dem Schiebeelement (4) angelankt ist, wobei die Verriegelungsnut (5) an dem Verschluss, insbesondere an einem in den Rohrstutzen (1) im oberen Bereich eingesetzten Einsatz, angeordnet ist.

7. Deckellos verschließbarer Tankstutzenabschluss nach einem der Ansprüche 2, 3, 4 oder 5, **dadurch gekennzeichnet, dass** die obere Verschlussklappe (3) an einem Einsatz, der in den Rohrstutzen (1) im oberen Bereich eingesetzt ist, angelankt ist, wobei die Verriegelungsnut (5) an dem Schiebeelement (4) angeordnet ist.

8. Deckellos verschließbarer Tankstutzenabschluss nach einem der vorhergehenden Ansprüche, **dadurch gekennzeichnet, dass** er über eine lösbare Verbindung mit dem Einfüllstutzen eines Kraftstofftanks verbindbar ist.

9. Deckellos verschließbarer Tankstutzenabschluss mit Schließsicherung nach einem der Ansprüche 1 bis 6, **dadurch gekennzeichnet, dass** er integraler Teil des Einfüllstutzens eines Kraftstofftanks verbindbar ist.

10. Deckellos verschließbarer Tankstutzenabschluss nach einem der vorhergehenden Ansprüche, **dadurch gekennzeichnet, dass** die Schwenksperre (7) und das Schiebeelement (4) gegen die Kraft einer gemeinsamen Rückstellfeder verschiebbar sind.

11. Deckellos verschließbarer Tankstutzenabschluss nach einem der vorhergehenden Ansprüche, **dadurch gekennzeichnet, dass** die Schwenksperre (7) als bewegliches Federelement ausgebildet ist, dass in dem Schiebeelement (4) gegen die Kraft einer Rückstellfeder quer zur Achse des Rohrstutzens (1) gegen einen vorderen Anschlag beweglich gelagert ist.

## Claims

1. A tank neck end that can be closed without a cap, for a fuel tank of a motor vehicle, having a pipe neck (1) for inserting an outlet pipe (2) of a pump nozzle and an upper closure, which has an upper closure flap (3), which is held in the closed position by a flap-securing means that at least in some sections engages behind the upper closure flap (3) as viewed from the filling opening, wherein the flap-securing means is formed by a locking groove (5), into which at least one section of the edge of the upper closure flap (3) engages, and wherein the flap-securing means can be detached by spatial displacement of the upper closure flap (3) by moving the edge out of the locking groove (5),
**characterised in that**
the lower region of the locking groove (5) is formed by a pivot lock (7), which can be displaced counter to the force of a spring and is formed in such a manner that it can be displaced by the spring-loaded upper closure flap (3) and, after the upper closure flap (3) bears against the upper groove edge, automatically springs back, engaging behind the upper closure flap (3) from below to close the locking groove (5), engaging behind the edge of the upper closure flap.

2. A tank neck end that can be closed without a cap, for a fuel tank of a motor vehicle, having a pipe neck (1) for inserting the outlet pipe (2) of a pump nozzle, having a capless closure, which has a spring-loaded, upper closure flap (3) and a sliding element (5), wherein the outlet pipe (2) can be introduced into the pipe neck (1) through an insertion opening in the sliding element (4), and the sliding element (5) is mounted in such a manner that it can be displaced counter to the force of a restoring spring from a closed position, in which it is arranged at least partially offset to the side of the pipe neck (1), to an open position, in which the outlet pipe (2) can be introduced through the sliding element (4) into the pipe neck (1) through the capless closure to refuel the motor vehicle, and wherein the closure flap is mounted in the tank neck end such that it can pivot about a pivot axis and the insertion opening is thereby blocked in the closed position, that an edge of the closure flap (3) engages in a locking groove (5) and is thereby released, that the edge of the closure flap (3) is pulled out of the locking groove (5) by the displacement of the sliding element (4),
**characterised in that**
the lower edge of the locking groove (5) is formed by a pivot lock (7) in the form of a spring element, which can be displaced in the direction of the groove bottom and can be displaced counter to the force of a spring and is mounted and formed in such a manner that it can be displaced by the spring-loaded, upper closure flap (3) to release the groove and, after the upper closure flap (3) bears against the upper groove edge, automatically springs back, engaging behind the upper closure flap (3), in order to close the locking groove (5).

3. The tank neck end that can be closed without a cap according to Claim 2,
**characterised in that**
the sliding element (4) is secured against displacement from the closed position into the open position by means of at least one securing element (6), which can be automatically deactivated by the insertion of the outlet pipe (2) to release the displaceability of the sliding element (4).

4. The tank neck end that can be closed without a cap according to Claim 2 or 3,
**characterised in that**
the pivot lock (7) is mounted such that it can be displaced counter to the force of the spring, in particular in the direction of the axis of the pipe neck (1).

5. The tank neck end that can be closed without a cap according to Claim 4,
**characterised in that**
the pivot lock (7) is formed by a spring element, which is mounted such that it can be displaced transversely to the longitudinal axis of the pipe neck (1) counter to the force of a restoring spring, has a flat face on its upper side to form the inner edge of the locking groove (5) and has an oblique plane as a contact face with the closing upper closure flap (3) on its underside facing the lower part of the pipe neck (1), wherein the force of the spring that effects the closing of the upper closure flap (3) relative to the oblique position of the oblique plane and to the spring force that effects the restoration of the spring element forming the pivot lock (7) is designed in such a manner that the closing upper closure flap (3) can move the pivot lock (7).

6. The tank neck end that can be closed without a cap according to any one of Claims 2, 3, 4 or 5,
**characterised in that**
the upper closure flap (3) is coupled to the sliding element (4), wherein the locking groove (5) is arranged on the closure, in particular on an insert that is inserted into the pipe neck (1) in the upper region.

7. The tank neck end that can be closed without a cap according to any one of Claims 2, 3, 4 or 5,
**characterised in that**
the upper closure flap (3) is coupled to an insert that is inserted into the pipe neck (1) in the upper region, wherein the locking groove (5) is arranged on the sliding element (4).

8. The tank neck end that can be closed without a cap according to any one of the preceding claims,
**characterised in that**
it can be connected to the filler neck of a fuel tank by means of a detachable connection.

9. The tank neck end that can be closed without a cap having a closing securing means according to any one of Claims 1 to 6,
**characterised in that**
it is an integral part of the filler neck of a fuel tank.

10. The tank neck end that can be closed without a cap according to any one of the preceding claims,
**characterised in that**
the pivot lock (7) and the sliding element (4) can be displaced counter to the force of a common restoring spring.

11. The tank neck end that can be closed without a cap according to any one of the preceding claims,
**characterised in that**
the pivot lock (7) is formed as a movable spring element, which is mounted such that it can move in the sliding element (4) counter to the force of a restoring spring transversely to the axis of the pipe neck (1) against a front stop.

## Revendications

1. Fermeture de tubulure de réservoir pouvant être fermée sans couvercle pour un réservoir de carburant d'un véhicule automobile, avec une tubulure (1) pour insérer le tube de distribution (2) d'un pistolet de pompe et une fermeture supérieure qui présente un clapet de fermeture (3) supérieur, lequel est maintenu en position de fermeture grâce à une sécurité de clapet entourant au moins partiellement par l'arrière le clapet de fermeture supérieur (3) lorsque vue depuis l'ouverture de remplissage, la sécurité de clapet étant formée par une rainure de verrouillage (5) dans laquelle au moins une portion du bord du clapet de fermeture supérieur (3) est en prise, et la sécurité de clapet pouvant être débloquée par déplacement spatial du clapet de fermeture supérieur (3) en faisant sortir le bord de la rainure de verrouillage (5), **caractérisée en ce que** la zone inférieure de la rainure de verrouillage (5) est formée par un verrou pivotant (7) pouvant se déplacer à l'encontre de la force d'un ressort, lequel verrou est réalisé de manière à pouvoir se déplacer grâce au clapet de fermeture supérieur (3) contraint par ressort et, une fois que le clapet de fermeture supérieur (3) repose contre le bord de rainure supérieure, à revenir élastiquement de manière automatique en saisissant par l'arrière le bord du clapet de fermeture supérieur, en saisissant par l'arrière le clapet de fermeture supérieur (3) depuis le bas pour la fermeture de la rainure de verrouillage (5).

2. Fermeture de tubulure de réservoir pouvant être fermée sans couvercle pour un réservoir de carburant d'un véhicule automobile, avec une tubulure (1) pour insérer le tube de distribution (2) d'un pistolet de pompe, avec une fermeture sans couvercle qui présente un clapet de fermeture supérieur (3) contraint par ressort et un élément de déplacement (5), le tube de distribution (2) pouvant être inséré à travers une ouverture d'insertion dans l'élément de déplacement (4) dans la tubulure (1), et l'élément de déplacement (5) étant logé de manière à pouvoir se déplacer à l'encontre de la force d'un ressort de rappel d'une position de fermeture, dans laquelle il est disposé latéralement par rapport à la tubulure (1) de manière au moins partiellement décalée, vers une position d'ouverture dans laquelle le tube de distribution (2) peut être inséré à travers l'élément de déplacement (4) dans la tubulure (1) pour faire le plein du véhicule automobile, à travers la fermeture sans couvercle, et le clapet de fermeture étant disposé de manière à pouvoir pivoter autour d'un axe de pivotement dans la fermeture de tubulure de réservoir, et l'ouverture d'insertion étant bloquée en position de fermeture en ce qu'un bord du clapet de fermeture (3) se met en prise dans une rainure de verrouillage (5) et étant débloquée en ce que, grâce au déplacement de l'élément de déplacement (4), le bord du clapet de fermeture (3) est retiré de la rainure de verrouillage (5),
**caractérisée en ce que**
le bord inférieur de la rainure de verrouillage (5) est formé par un verrou pivotant (7) sous la forme d'un élément de ressort pouvant se déplacer en direction du fond de rainure, lequel peut se déplacer à l'encontre de la force d'un ressort et est logé et réalisé de manière à pouvoir se déplacer pour le déblocage de la rainure grâce au clapet de fermeture supérieur (3) contraint par ressort et, une fois que le clapet de fermeture supérieur (3) repose contre le bord de rainure supérieur, à revenir élastiquement de manière automatique en saisissant par l'arrière le clapet de fermeture supérieur (3) afin de fermer la rainure de verrouillage (5).

3. Fermeture de tubulure de réservoir pouvant être fermée sans couvercle selon la revendication 2, **caractérisée en ce que** l'élément de déplacement (4) est protégé contre un déplacement de la position de fermeture vers la position d'ouverture via au moins un élément de sécurité (6), lequel peut être automatiquement désactivé pour le déblocage de la capacité de déplacement en insérant le tube de distribution (2).

4. Fermeture de tubulure de réservoir pouvant être fermée sans couvercle selon la revendication 2 ou 3, **caractérisée en ce que** le verrou pivotant (7) est logé de manière à pouvoir se déplacer à l'encontre de la force du ressort en particulier en direction de l'axe de la tubulure (1).

5. Fermeture de tubulure de réservoir pouvant être fermée sans couvercle selon la revendication 4, **caractérisée en ce que** le verrou pivotant (7) est formé par un élément de ressort logé de manière à pouvoir se déplacer à l'encontre de la force d'un ressort de rappel transversalement à l'axe longitudinal de la tubulure (1), lequel présente une surface plane sur son côté supérieur pour la formation du bord intérieur de la rainure de verrouillage (5) et présente un plan incliné sur son côté inférieur faisant face à la partie inférieure de la tubulure (1) en tant que surface de contact avec le clapet de fermeture supérieur (3) se fermant, moyennant quoi la force du ressort qui provoque la fermeture du clapet de fermeture supérieur (3), compte tenu de la position oblique du plan incliné et de la force élastique qui provoque le rappel de l'élément de ressort formant le verrou pivotant (7), est étudiée de manière à ce que le clapet de fermeture supérieur (3) se fermant soit en mesure de repousser le verrou pivotant (7).

6. Fermeture de tubulure de réservoir pouvant être fermée sans couvercle selon l'une des revendications 2, 3, 4 ou 5, **caractérisée en ce que** le clapet de fermeture supérieur (3) est articulé sur l'élément de déplacement (4), moyennant quoi la rainure de verrouillage (5) est disposée sur la fermeture, en particulier sur un insert mis en place dans la zone supérieure dans la tubulure (1).

7. Fermeture de tubulure de réservoir pouvant être fermée sans couvercle selon l'une des revendications 2, 3, 4 ou 5, **caractérisée en ce que** le clapet de fermeture supérieur (3) est articulé sur un insert, lequel est mis en place dans la tubulure (1) dans la zone supérieure, moyennant quoi la rainure de verrouillage (5) est disposée sur l'élément de déplacement (4).

8. Fermeture de tubulure de réservoir pouvant être fermée sans couvercle selon l'une des revendications précédentes, **caractérisée en ce qu'**elle peut être reliée par l'intermédiaire d'une liaison détachable à la tubulure de remplissage d'un réservoir de carburant.

9. Fermeture de tubulure de réservoir pouvant être fermée sans couvercle avec une sécurité de fermeture selon l'une des revendications 1 à 6, **caractérisée en ce qu'**elle peut être reliée en tant que partie intégrale de la tubulure de remplissage d'un réservoir de carburant.

10. Fermeture de tubulure de réservoir pouvant être fermée sans couvercle selon l'une des revendications précédentes, **caractérisée en ce que** le verrou pivotant (7) et l'élément de déplacement (4) peuvent se déplacer à l'encontre de la force d'un ressort de rappel commun.

11. Fermeture de tubulure de réservoir pouvant être fermée sans couvercle selon l'une des revendications précédentes, **caractérisée en ce que** le verrou pivotant (7) est réalisé en tant qu'élément de ressort mobile, lequel est logé de manière mobile à l'encontre de la force d'un ressort de rappel, transversalement à l'axe de la tubulure (1), contre une butée avant, dans l'élément de déplacement (4).
